# EUROPEAN PATENT APPLICATION

(11) **EP 4 703 775 A1**
(43) Date of publication of application: **04.03.2026**
(21) Application number: 25193886.6
(22) Date of filing: 04.08.2025
(51) Int. Cl.: G01W 1/10, G06V 10/82

(54) **TECHNIQUES FOR GENERATING SYNTHETIC THREE DIMENSIONAL WEATHER DATA**

(30) Priority: 29.08.2024 IN 202411065282; 11.10.2024 US 202418913730
(71) Applicant: HONEYWELL INTERNATIONAL INC., Charlotte, NC 28202 (US)
(72) Inventor: PAL, Debabrata, Charlotte, 28202 (US); YOGESHA, Aralakuppe Ramegowda, Charlotte, 28202 (US); ALLADI, Abhishek, Charlotte, 28202 (US); SADANANDA, Pradeep, Charlotte, 28202 (US); NAGARAJ, Srikanth, Charlotte, 28202 (US)
(74) Representative: Haseltine Lake Kempner LLP

(57) **Abstract**

Using artificial intelligence, arbitrary synthetic three dimensional weather data may be generated using descriptive information about at least one weather element. A weather element is a type of weather such as rain, wind, cloud, and any other type of weather regardless of complexity; descriptive information of a weather element may include weather type and/or characteristics of the weather type (e.g., relative position with respect to a body, dimensions, shape, intensity, and or any other characteristic of the weather type). Such descriptive information of a weather element may be provided as text, image(s), and/or any other form of descriptive information. Optionally, such synthetic three dimensional weather data may be received by a two dimensional weather algorithm to ascertain whether the algorithm properly processes such data into a two dimensional image. Thus, the two dimensional weather algorithm may be evaluated over a more diverse range of weather conditions to ensure its accuracy.

## Description

### CROSS-REFERENCE TO RELATED APPLICATION

This application claims priority to Indian Provisional Patent Application No. 202411065282 filed on August 29, 2024, the contents of which are incorporated herein by reference in their entirety.

### BACKGROUND

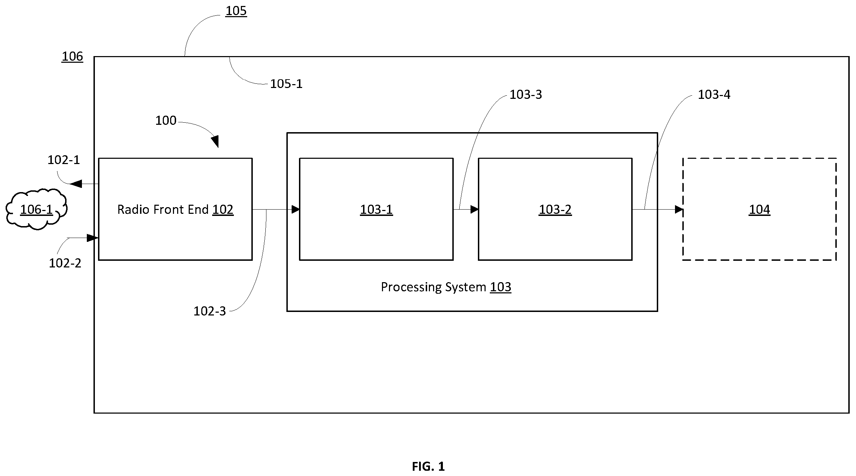

Weather radar may be used to transform radar signals into two dimensional data which, for example, can be projected on a display which can be viewed by a user and/or received by an end processing system for subsequent processing. FIG. 1 illustrates a block diagram of one embodiment of a weather radar 100. The weather radar 100 includes a radio front end 102, a processing system (or processing circuitry) 103, and an optional display and/or end processing system 104. For pedagogical purposes, the optional display and/or end processing system 104 is illustrated as being part of the weather radar; however, in other embodiments, it may not be part of the weather radar 100. Optionally, the weather radar 100 may be mounted on and/or in a body 105, *e.g.,* of a vehicle 105-1, living entity, or a structure. For pedagogical purposes, FIG. 1 illustrates that the body 105 is that of a vehicle 105-1, *e.g.,* an aircraft or any other vehicle.

The radio front end 102 is configured to transmit radar signals 102-1 and to receive reflected radar signals 102-2. Optionally, the radio front end 102 includes at least one antenna configured to electromagnetically coupled the transmitted radar signals to an environment, *e.g*., atmosphere, about and/or outside of weather radar, *e.g.,* the body, and the reflected radar signals to other components of the radio front end. The reflected radar signals 102-2 are a portion of the transmitted radar signals 102-1 reflected from weather element(s) 106-1, *e.g.,* water, ice, dust, in the environment 106. The radio front end 102 is further configured to transmit electrical signals 102-3 (representative of the weather element(s) with respect to relative geographical position with respect to the weather radar 100 and/or the body 105) to the processing system 103.

The processing system 103 includes a three dimensional weather algorithm 103-1 and a two dimensional weather algorithm 103-2. The three dimensional weather algorithm 103-1 is configured to transform the electrical signals 102-3 into three dimensional weather data 103-3 which is provided by the three dimensional weather algorithm 103-1 to the two dimensional weather algorithm 103-2. The two dimensional weather algorithm 103-2 is configured to transform the three dimensional weather data 103-3 into two dimensional weather data 103-4 which is received by the optional display and/or end processing system 104. Optionally, the optional display and/or end processing system 104 projects, on a display, an image of representative of the weather element(s) with respect to relative geographical position with respect to the weather radar 100 and/or the body 105.

It is desirable to test the two dimensional weather algorithm 103-2 to ensure that it accurately represents the weather element(s) and a relative geographical position of the weather element(s) with respect to the weather radar 100 and/or the body 105. This may be done by obtaining, by weather radar measurements, three dimensional weather data 103-3 (as described above) for different weather conditions. However, it is not cost effective or safe to characterize, by weather radar measurements, all weather conditions. For example, it would be dangerous to characterize some weather conditions, for examples hurricanes and tornados. Lacking diverse types of three dimensional weather data, a two dimensional weather algorithm may not be robustly tested to ensure it accurately represents two dimensional weather data under a wide range of weather conditions.

### SUMMARY

In some aspects, the techniques described herein relate to a method for generating synthetic three dimensional weather data, the method including: receiving, at a trained artificial intelligence (AI), descriptive information of at least one weather element; and using the descriptive information of the at least one weather element, generating, with the AI, the synthetic three dimensional weather data.

In some aspects, the techniques described herein relate to a non-transitory computer readable medium storing a program causing at least one processor to execute a process to generating synthetic three dimensional weather data, the process including: receiving, at a trained artificial intelligence (AI), descriptive information of at least one weather element; and using the descriptive information of the at least one weather element, generating, with the AI, the synthetic three dimensional weather data.

In some aspects, the techniques described herein relate to an apparatus for generating synthetic three dimensional weather data, the apparatus including: input circuitry configured to receive descriptive information of at least one weather element; and processing circuitry communicatively coupled to the input circuitry, including a trained artificial intelligence (AI), and configured to: receive, at the trained AI, the descriptive information of at least one weather element; and using the descriptive information of the at least one weather element, generate, with the AI, the synthetic three dimensional weather data.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1 illustrates a block diagram of one embodiment of a weather radar;
FIG. 2A illustrates a block diagram of one embodiment of an apparatus for synthesizing synthetic three dimensional weather data based upon descriptive information of at least one weather element;
FIG. 2B illustrates a cross sectional view of an image illustrating a position of a weather element in a first plane;
FIG. 2C illustrates a cross sectional view of another image illustrating a position of the weather element in a second plane;
FIG. 2D illustrates a cross sectional view of an image illustrating a position of a weather element in another first plane;
FIG. 3 illustrates a block diagram of one embodiment of a processing system;
FIG. 4 illustrates a block diagram of one embodiment of a processing system configured to generate synthetic three dimensional weather data;
FIG. 5 illustrates a block diagram of an untrained two dimensional weather data to three dimensional weather data converter artificial intelligence configured to be trained;
FIG. 6 illustrates a block diagram of an untrained synthetic two dimensional weather data generator artificial intelligence including a trained two dimensional weather image encoder, an untrained other weather data encoder, an untrained positional encoder, and an untrained two dimensional weather image decoder;
FIG. 7 illustrates a flow diagram of one embodiment of a method of training an artificial intelligence configured to synthesize synthetic three dimensional weather data based upon descriptive information of at least one weather element; and
FIG. 8 illustrates a flow diagram of one embodiment of a method of using a trained artificial intelligence configured to synthesize synthetic three dimensional weather data based upon descriptive information of at least one weather element.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized, and that structural, mechanical, and/or electrical changes may be made. Furthermore, each method presented in the drawing figures and the specification is not to be construed as limiting the order in which the individual steps may be performed. The following detailed description is not to be taken in a limiting sense.

For pedagogical purposes, artificial intelligence (AI) may be described as generative artificial intelligence. Generative AI may be implemented using small language models, medium language models, large language model, transfer learning techniques, and/or transformer techniques. Embodiments of the invention, however, are applicable to artificial intelligence generally including types of artificial intelligence which may or may not be generative artificial intelligence.

Embodiments of the invention provide a technological improvement for generating diverse types of three dimensional to testing a two dimensional weather algorithm by using artificial intelligence, *e.g*., generative artificial intelligence, based upon descriptive information of the weather element(s). A weather element is a type of weather such as rain, wind, cloud, and any other type of weather regardless of complexity thereof; descriptive information of a weather element may include weather type and characteristics of the weather type. Such characteristics include relative position with respect to the weather radar, *e.g.,* the body, dimensions, shape, intensity, and or any other characteristic of the weather type. The form of such descriptive information of a weather element may include text, image(s), and/or any other form of descriptive information. The synthetic three dimensional weather data is artificial three dimensional weather data generated by the AI, and not by a weather radar measurements. Such synthetic three dimensional weather data may be received by the two dimensional weather algorithm to ascertain whether the algorithm properly represents such three dimensional weather data in a two dimensional image generated by the algorithm. Embodiments of the invention can be used to generate three dimensional weather data representing arbitrary and diverse range of weather conditions. As a result, the two dimensional weather algorithm may be evaluated over such arbitrary and diverse range of weather conditions to ensure that the algorithm accurately generates two dimensional weather data representative of the three dimensional weather data. Thus, embodiments of the invention are also an improvement for validating a two dimensional weather algorithm.

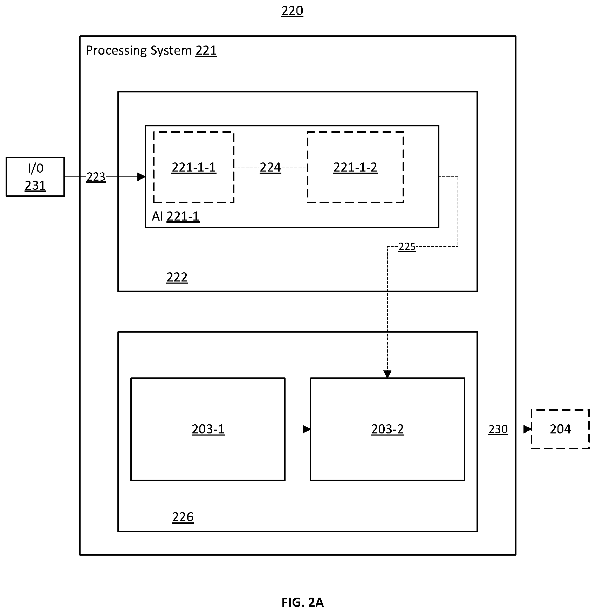

FIG. 2A illustrates a block diagram of one embodiment of an apparatus 220 for synthesizing synthetic three dimensional weather data based upon descriptive information of at least one weather element. The apparatus 220 includes a processing system (or processing circuitry) 221. The processing circuitry 221 includes an artificial intelligence 221-1. Optionally, the AI 221-1, or one or more components of the AI 221-1, are a generative AI. Optionally, the AI 221-1 includes synthetic two dimensional weather data generator 221-1-1 and a two dimensional weather data to three dimensional weather data converter AI 221-1-2. Optionally, each of the synthetic two dimensional weather data generator AI 221-1-1 and the two dimensional weather data to three dimensional weather data converter AI 221-1-2 are a generative AI.

Optionally, the AI 221-1 is implemented by a neural network 222 in the processing system 221. Optionally, as illustrated in FIG. 1 for pedagogical purposes, the synthetic two dimensional weather data generator AI 221-1-1 and the two dimensional weather data to three dimensional weather data converter AI 221-1-2 are implemented by the neural network 222; however, optional and alternatively each of the synthetic two dimensional weather data generator AI 221-1-1 and the two dimensional weather data to three dimensional weather data converter AI 221-1-2 are implemented in a different neural networks.

The AI 221-1 is configured to receive descriptive information of at least one weather element. The AI 221-1 is further configured to transmit (or provide) synthetic three dimensional weather data generated by the AI 221-1 based on the received descriptive information. Optionally, when the AI 221-1 includes synthetic two dimensional weather data generator AI 221-1-1 and the two dimensional weather data to three dimensional weather data converter AI 221-1-2, the descriptive information of at least one weather element may include at least one two dimensional weather image, text describing one or more of the at least one two dimensional weather image, and/or one or more other weather elements, and/or at least one image illustrating position of at least one weather element. Optionally, the image illustrating the position of the at least one weather element describes at least one weather element described by the text or the two dimensional weather image.

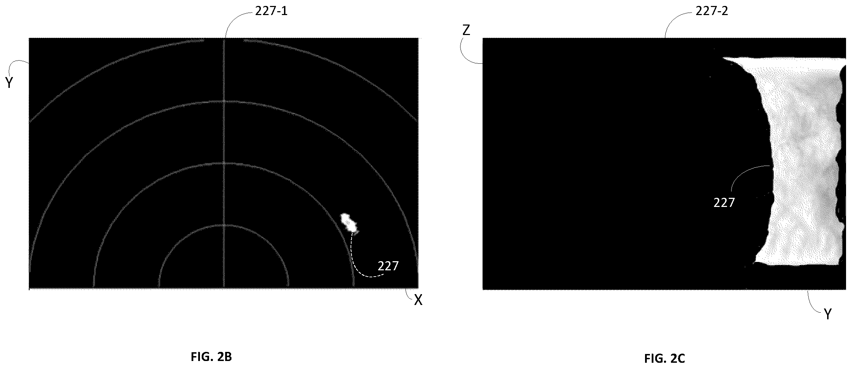

FIG. 2B illustrates a cross sectional view of an image illustrating a position of a weather element, *e.g.,* a first cloud, 227 in a first plane 227-1. Optionally, such first plane 227-1 is defined by a first pair of orthogonal axes, *e.g.,* an x axis X and a y axis Y, in a three dimensional volume defined by three orthogonal axes, *e.g.,* the x axis X, the y axis Y, and the z axis Z.

FIG. 2C illustrates a cross sectional view of another image illustrating a position of the weather element, *e.g.,* the first cloud, 227, in a second plane 227-2. Optionally, such second plane 227-2 is defined by a second pair of orthogonal axes, *e.g.,* the y axis Y and a z axis Z, in a three dimensional volume defined by the three orthogonal axes, *e.g.,* the x axis X, the y axis Y, and the z axis Z, and thus the second plane 227-2 is orthogonal to the first plane 227-1.

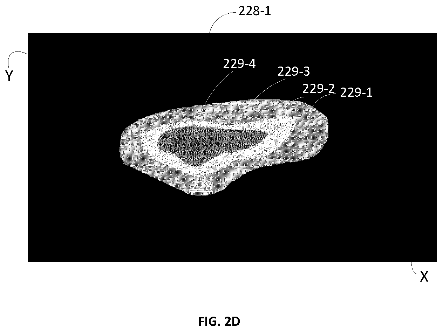

FIG. 2D illustrates a cross sectional view of an image illustrating a position of a weather element, *e.g.,* a second cloud, 228 in another first plane 228-1. The second cloud 228 has a reflectivity which varies by position in the second cloud 228. For pedagogical purposes, each region with a different level of reflectivity is illustrated by a different shade of gray 229-1, 229-2, 229-3, 229-4; however, level of reflectivity may be illustrated by any other means including without limitation different colors and/or different types of cross-hatching. Level of reflectivity varies based upon, for example, water density. Optionally, such first plane 228-1 is defined by a first pair of orthogonal axes, *e.g.,* an x axis X and a y axis Y, in a three dimensional volume defined by three orthogonal axes, *e.g.,* the x axis X, the y axis Y, and the z axis Z.

Optionally, when the AI 221-1 includes the synthetic two dimensional weather data generator AI 221-1-1 and the two dimensional weather data to three dimensional weather data converter AI 221-1-2, then the synthetic two dimensional weather data generator AI 221-1-1 is configured to receive the descriptive information of at least one weather element (*e.g.,* the at least one two dimensional weather image, the text describing one or more of the two dimensional weather images and/or one or more other weather elements, and/or the at least one image illustrating position of at least one weather element) 223. Optionally, descriptive information of at least one weather element is configured to be received from an input device (or input circuit or ID) 231; the input device 231 may be a keyboard, a scanner, circuitry for receiving an optical image in electronic form, and/or any other type of input device. The input device 231 is communicatively coupled to the processing system 221. Optionally, using such received descriptive information of at least one weather element (*e.g.,* the at least one two dimensional weather image, the text describing one or more of the two dimensional weather images and/or one or more other weather elements, and/or the at least one image illustrating position of at least one weather element) 223, the synthetic two dimensional weather generator AI 221-1-1 is configured to generate a synthetic two dimensional weather data 224. Optionally, the synthetic two dimensional weather data 224 may be the same type of two dimensional weather data generated by the two dimensional weather algorithm, a two dimensional image of weather, or any other format of two dimensional weather data.

The two dimensional weather data generator 221-1-1 is configured to transmit the synthetic two dimensional weather data 224 to the two dimensional weather data to three dimensional weather data converter AI 221-1-2. Using the synthetic two dimensional weather data 224, the two dimensional image to three dimensional data converter AI 221-1-2 is configured to generate synthetic three dimensional weather data 225. Optionally, the synthetic three dimensional weather data 225 utilizes the same format as the three dimensional weather data generated by a weather radar and as discussed elsewhere herein; however, a different format may be used.

Optionally, the processing system 221 further comprises the two dimensional weather algorithm 203-2 described elsewhere herein with regards to a weather radar. Optionally, the processing system 221 also optionally includes three dimensional weather data 203-1 measured by weather radar(s) and described elsewhere herein with regards to the weather radar. Optionally, for pedagogical purposes, the two dimensional weather algorithm 203-2 and the optional measured three dimensional weather data 203-1 are illustrated as being stored in a state machine 226; alternatively and optionally, each of the two dimensional weather algorithm 203-2 and the optional measured three dimensional weather data 203-1 may be stored in a separate state machine. The optional two dimensional weather algorithm 203-2 is optionally configured to receive the synthetic three dimensional weather data and/or the optional measured three dimensional weather data 203-1 and to generate a synthetic two dimensional weather data 230. Optionally, the apparatus 220 further includes a display and/or an end processing system 204. Optionally, the synthetic two dimensional weather data 230 is optionally received by the optional display and/or the end processing system 204.

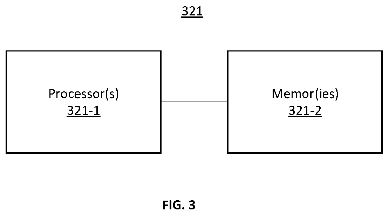

FIG. 3 illustrates a block diagram of one embodiment of a processing system (or processing circuitry) 321. The processing system 321 includes at least one processor (or processor circuit) 321-1 communicatively coupled to at least one memory (or memory circuit) 321-2.

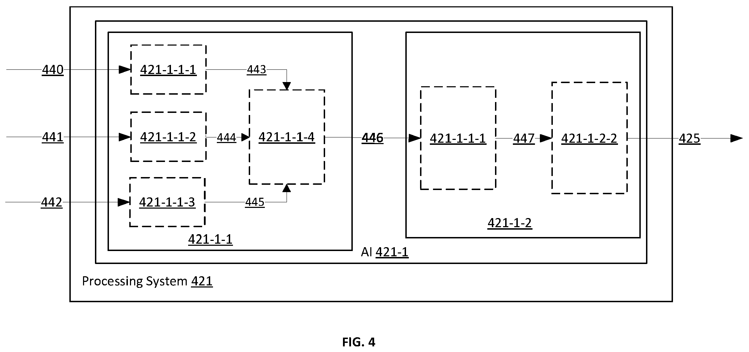

FIG. 4 illustrates a block diagram of one embodiment of a processing system (or processing circuitry) 421 configured to generate synthetic three dimensional weather data. The illustrated processing system 421 first generates a synthetic two dimensional weather image 446 using certain descriptive information of at least one weather element. The processing system 421 then generates synthetic three dimensional weather data 425 using the synthetic two dimensional weather image 446.

The processing system 421 includes the AI 421-1; the AI 421-1 includes the synthetic two dimensional weather data generator AI 421-1-1 and the two dimensional weather data to three dimensional weather data converter AI 421-1-2. In the illustrated embodiment, the synthetic two dimensional weather data generator AI 421-1-1 is a synthetic two dimensional weather image generator AI, and the two dimensional weather data to three dimensional weather data converter AI 421-1-2 is a synthetic two dimensional weather image to three dimensional weather data converter AI. Using the certain descriptive information of at least one weather element, the synthetic two dimensional weather image generator AI 421-1-1 is configured to generate the synthetic two dimensional weather image 446. Using the synthetic two dimensional weather image 446, the synthetic two dimensional weather image to three dimensional weather data converter AI 421-1-2 is configured to generate synthetic three dimensional weather data 425.

Optionally, the synthetic two dimensional weather image generator AI 421-1-1 includes a two dimensional weather image encoder 421-1-1-1, an other weather data encoder 421-1-1-2, a positional encoder 421-1-1-3, and a two dimensional weather image decoder 421-1-1-4. Each encoder is configured to extract features from a sequence of input data and convert each extracted feature into a vector. The output of the encoder is an embedding space of such vectors. Optionally, the embedding space of such vectors contains a lowest possible dimensions of a representation of input data. Each decoder is configured to generate creative outputs based on vectors of the extracted features.

The synthetic two dimensional weather image generator AI 421-1, *e.g.,* the optional two dimensional weather image encoder 421-1-1-1, is configured to receive at least one two dimensional weather image 440, and to generate first embedded data 443 therefrom. The synthetic two dimensional weather image generator AI 421-1, *e.g.,* the optional other weather data encoder 421-1-1-2, is further configured to receive other weather data 441, *e.g.,* text describing one or more of the two dimensional weather images and/or one or more other weather elements, and to generate second embedded data 444 therefrom. The synthetic two dimensional weather image generator AI 421-1-1, *e.g.,* the optional positional encoder 421-1-1-3, is also configured to receive at least one image illustrating position of at least one weather element 442, *e.g.,* at least one image illustrating position of the one or more other weather elements, and to generate third embedded data 445, therefrom. Optionally, such at least one image includes two dimensional images in different, *e.g.,* orthogonal planes, of the same weather element. Optionally, the orthogonal planes may be horizontal and vertical planes, for example, with respect to a surface of the Earth. The two dimensional weather image decoder 421-1-1-4 is configured to receive the first, the second, and the third embedded data 443, 444, 445 and to generate the synthetic two dimensional weather image 446.

Optionally, the other weather data used to train and/or operate embodiments of the invention may be or additionally include land cover data describing land cover of the terrain of the Earth's surface below the two dimensional weather image generated by the two dimensional weather algorithm. Such land cover description may be used to account for ground return signals which may affect such training and operations of embodiments of the invention.

Optionally, the two dimensional weather data to three dimensional weather data converter AI 421-1-2 includes the two dimensional weather image encoder 421-1-1-1 and a three dimensional weather data decoder 421-1-2-2. The two dimensional weather data encoder 421-1-2-1 is configured to receive the synthetic two dimensional weather image 446 from the synthetic two dimensional weather image generator AI 421-1-1, *e.g.,* the two dimensional weather image decoder 421-1-1-4, and to generate fourth embedded data 447 therefrom. Using the fourth embedded data 447, the three dimensional weather data decoder 421-1-2-2 is configured to generate the synthetic three dimensional weather data 425.

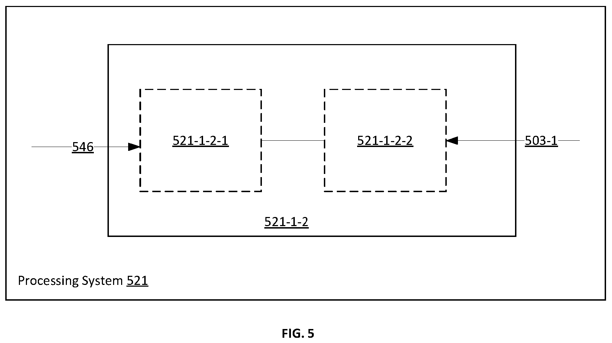

FIG. 5 illustrates a block diagram of an untrained two dimensional weather data to three dimensional weather data converter AI 521-1-2, *e.g*., including an untrained two dimensional weather image encoder 521-1-2-1 and an untrained three dimensional weather data decoder 521-1-2-2, configured to be trained. The untrained two dimensional weather data to three dimensional weather data converter AI 521-1-2, and any of its components, are configured to be trained on a processing system 521. Optionally, the untrained two dimensional weather data to three dimensional weather data converter AI 521-1-2, *e.g.,* the untrained two dimensional weather image encoder 521-1-1-1 and the untrained three dimensional weather data decoder 521-1-2-2, are trained before the untrained synthetic two dimensional weather data generator AI, *e.g.,* and any of its untrained constituent components. A set of pairs of measured three dimensional weather data 503-1 and a two dimensional weather image 546 are received by the untrained two dimensional weather data to three dimensional weather data converter AI 521-1-2. Optionally, the two dimensional weather image 546 is generated by the two dimensional weather algorithm using the measured three dimensional weather data 503-1, and is known to be an accurate two dimensional representation of the measured three dimensional weather data. For each pair, the three dimensional weather data 503-1 is received by the untrained three dimensional weather data decoder 521-1-2-2 and the two dimensional weather image 546 is received by the untrained two dimensional weather image encoder 521-1-1-1.

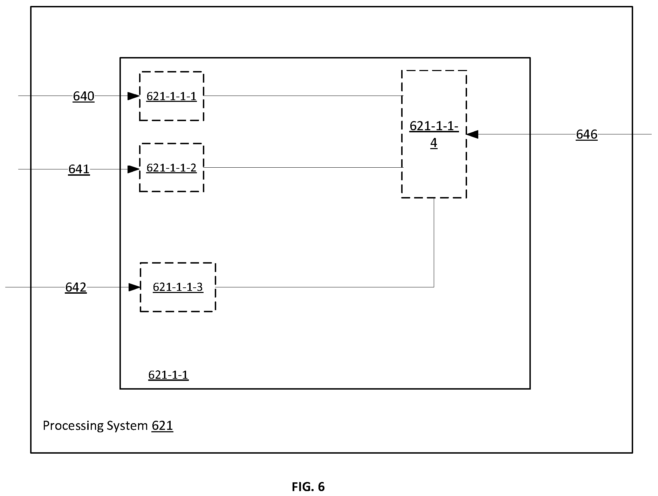

FIG. 6 illustrates a block diagram of an untrained synthetic two dimensional weather data generator AI 621-1-1 including a trained two dimensional weather image encoder 621-1-1-1, an untrained other weather data encoder 621-1-1-2, an untrained positional encoder 621-1-1-3, and an untrained two dimensional weather image decoder 621-1-1-4. Optionally, the trained two dimensional weather image encoder 621-1-1-1 was trained as described elsewhere herein, *e.g.,* as described with respect to FIG. 5. The untrained synthetic two dimensional weather data generator AI 621-1-1 and any of its components are configured to be trained on a processing system 621.

Sets are received by the untrained two dimensional weather data to three dimensional weather data converter AI 621-1-2. Each set includes a two dimensional weather image 646, and at least one two dimensional weather image 640, other weather data 641, *e.g.,* text describing one or more of the two dimensional weather images and/or one or more other weather elements, and/or at least one image illustrating position of at least one weather element 642, *e.g.,* at least one image illustrating position of the one or more other weather elements from which the two dimensional weather image 646 can be derived. Optionally, the two dimensional weather image 646 is received by the untrained two dimensional weather image decoder 621-1-1-4, the two dimensional weather image 646 is received by the untrained synthetic two dimensional weather data generator AI 621-1-1, the other weather data 641 is received by the untrained other weather data encoder 621-1-1-2, and the at least one image illustrating position of at least one weather element 642 is received by the untrained positional encoder 621-1-1-3.

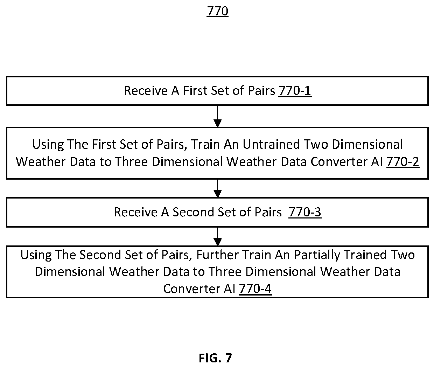

FIG. 7 illustrates a flow diagram of one embodiment of a method 770 of training an artificial intelligence configured to synthesize synthetic three dimensional weather data based upon descriptive information of at least one weather element. Exemplary methods herein may be implemented by one or more of the apparatuses illustrated in FIGS. 2A-6. To the extent a method herein is described herein as being implemented with the apparatus illustrated in one or more of FIGS. 2A-6, it is to be understood that other embodiments can be implemented in other ways. Techniques described with respect to the embodiments illustrated by FIGS. 2A-6 may be applicable to one or more of the methods disclosed herein. The blocks of the flow diagrams herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

Optionally, artificial intelligence or a component thereof, *e.g.,* an encoder or a decoder, and blocks executed thereby, are performed by the neural network in the processing system.

In block 770-1, a first set of pairs of measured three dimensional weather data and a two dimensional weather image are received, *e.g.,* by an untrained two dimensional weather data to three dimensional weather data converter AI (or component(s) thereof). Optionally, an untrained two dimensional weather image encoder, of such converter AI, receives the two dimensional weather image and an untrained three dimensional weather data decoder, and the untrained three dimensional weather data decoder, of such converter AI, receives the measured three dimensional weather data. Optionally, for each pair, a two dimensional weather image is generated by a two dimensional weather algorithm using the measured three dimensional weather data, and is known to be an accurate two dimensional representation of the measured three dimensional weather data.

In block 770-2, using the first set of pairs, the untrained two dimensional weather data to three dimensional weather data converter AI (for example, the untrained two dimensional weather image encoder and the untrained three dimensional weather data decoder thereof) is trained. Optionally, each of the untrained two dimensional weather image encoder and the untrained other weather data encoder are trained.

In block 770-3, a second set of pairs, of descriptive information of at least one weather element (*e.g.,* the at least one two dimensional weather image, the text describing one or more of the two dimensional weather images and/or one or more other weather elements, and/or the at least one image illustrating position of at least one weather element) and a two dimensional weather image, is received, *e.g.,* by an untrained or a partially trained two dimensional weather data to three dimensional weather data converter AI (or component(s) thereof). Optionally, the trained two dimensional weather image encoder, of such converter AI, receives the at least one two dimensional weather image and optionally an untrained other weather encoder, of such converter AI, receives the text describing one or more of the two dimensional weather images and/or one or more other weather elements, and/or an untrained positional encoder receives the at least one image illustrating position of at least one weather element. Optionally, for each pair, the two dimensional weather image is known to be an accurate two dimensional representation of the descriptive information of at least one weather element.

In block 770-4, using the second set of pairs, the untrained or the partially trained two dimensional weather data to three dimensional weather data converter AI (or component(s) thereof) is trained. Optionally, using the trained two dimensional weather image encoder, which is part of the two dimensional weather data to three dimensional weather data converter AI, the untrained other weather data encoder, the untrained positional encoder, and/or the two dimensional weather image decoder are trained. Thus, optionally, an untrained two dimensional weather image encoder in a synthetic two dimensional weather data generator AI is first trained, and then the trained two dimensional weather image encoder in a two dimensional weather data to three dimensional weather data converter AI is used to train an untrained three dimensional weather data decoder in the two dimensional weather data to three dimensional weather data converter AI.

For pedagogical purposes, FIGS. 5-7 are described as training AI, *e.g.,* components thereof, for example, untrained encoders and untrained decoders. However, alternatively the techniques illustrated with respect to one or more of FIGS. 5-7 may be used to train trained AI, *e.g*., components thereof, for example, trained encoders and/or trained decoder, to improved their accuracy and/or to diminish occurrence of hallucinations. Thus, the AI or at least one of the AI's constituent components may be trained either prior to or after the AI or the at least one of the AI's constituent components are initially trained. Optionally, the trained AI or one or more components of the trained AI are a trained generative AI.

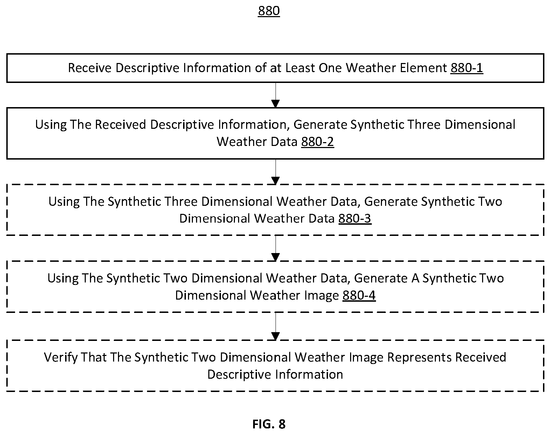

FIG. 8 illustrates a flow diagram of one embodiment of a method 880 of using a trained artificial intelligence configured to synthesize synthetic three dimensional weather data based upon descriptive information of at least one weather element. In block 880-1, descriptive information of at least one weather element (*e.g.,* the at least one two dimensional weather image, the text describing one or more of the two dimensional weather images and/or one or more other weather elements, and/or the at least one image illustrating position of at least one weather element) is received, *e.g*., by a trained AI, for example, by a trained synthetic two dimensional weather data generator AI. Optionally,
(a) the at least one two dimensional weather image is received by a trained two dimensional weather image encoder;
(b) the text describing one or more of the two dimensional weather images is received by a trained other weather data encoder; and/or
(c) the at least one image illustrating position of at least one weather element is received by a trained positional encoder.

In block 880-2, using the received descriptive information of at least one weather element (*e.g.,* the at least one two dimensional weather image, the text describing one or more of the two dimensional weather images and/or one or more other weather elements, and/or the at least one image illustrating position of at least one weather element), synthetic three dimensional weather data is generated, *e.g*., by the trained AI, for example, by the trained synthetic two dimensional weather data generator AI and a trained two dimensional weather data to three dimensional weather data converter AI. Optionally, using the received descriptive information of at least one weather element, the trained AI, *e.g.,* the trained synthetic two dimensional weather data generator AI, generates a synthetic two dimensional weather image, and then, using the synthetic two dimensional weather image, the trained AI, *e.g.,* the trained two dimensional weather data to three dimensional weather data converter AI, generates the synthetic three dimensional weather data

Optionally,
(a) using the received at least one two dimensional weather image, the trained two dimensional weather image encoder generates first embedded data;
(b) using the received text describing one or more of the two dimensional weather images, the trained other weather data encoder generates second embedded data; and/or
(c) using the received at least one image illustrating position of at least one weather element, the trained positional encoder generates third embedded data.

Optionally, a trained two dimensional weather image decoder is configured to receive the first, the second, and/or the third embedded data. Optionally, using the received first, the received second, and/or the receive third embedded data, the trained two dimensional weather image decoder is configured to generate a synthetic two dimensional weather image.

Optionally, the trained two dimensional weather image encoder is configured to receive the synthetic two dimensional weather image. Optionally, using the synthetic two dimensional weather image encoder, the synthetic two dimensional weather image encoder generates fourth embedded data. A trained three dimensional weather data decoder is configured to receive the fourth embedded data. Using the fourth embedded data, the trained three dimensional weather data decoder generates the synthetic three dimensional weather data.

Optionally, in block 880-3, using the synthetic three dimensional weather data, a synthetic two dimensional weather data is generated, *e.g*., by a two dimensional weather algorithm. Optionally, the synthetic two dimensional weather data is generated using the synthetic three dimensional weather data and measured three dimensional weather data.

Optionally, in block 880-4, using the synthetic two dimensional weather data, a synthetic two dimensional weather image is generated, *e.g*., by a display and/or an end processing system. Optionally, in block 880-4, the synthetic two dimensional weather image is verified with respect to the received descriptive information of the at least one weather element to ascertain whether the weather and location parameters are accurately represented.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

A processing system may include processor circuitry coupled to memory circuitry. The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

Methods of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

### Example Embodiments

Example 1 includes a method for generating synthetic three dimensional weather data, the method comprising: receiving, at a trained artificial intelligence (AI), descriptive information of at least one weather element; and using the descriptive information of the at least one weather element, generating, with the AI, the synthetic three dimensional weather data.

Example 2 includes the method of Example 1, wherein the descriptive information of the at least one weather element includes at least one two dimensional weather image, text describing one or more of the at least one two dimensional weather image, and/or one or more other weather elements, and/or at least one image illustrating position of the at least one weather element.

Example 3 includes the method of any of Examples 1-2, wherein receiving, at the trained AI, the descriptive information of the at least one weather element comprises receiving, at a trained synthetic two dimensional weather data generator AI, the descriptive information of the at least one weather element; wherein using the descriptive information of the at least one weather element, generating, with the AI, the synthetic three dimensional weather data includes: using the descriptive information of the at least one weather element, generating, with the trained synthetic two dimensional weather data generator AI, a synthetic two dimensional weather image; and using the synthetic two dimensional weather image, generating, with a trained two dimensional weather data to three dimensional weather data converter AI, the synthetic three dimensional weather data.

Example 4 includes the method of any of Examples 1-3, wherein receiving, at the trained synthetic two dimensional weather data generator AI, the descriptive information of the at least one weather element comprises receiving, by a trained two dimensional weather image encoder, at least one two dimensional weather image; receiving, by a trained other weather data encoder, text describing one or more of two dimensional weather images; and/or receiving, by a trained positional encoder, at least one image illustrating position of the at least one weather element; and wherein using the descriptive information of the at least one weather element, generating, with the trained synthetic two dimensional weather data generator AI, the synthetic two dimensional weather image comprises: at least one of: using the at least one two dimensional weather image, generating, with the trained two dimensional weather image encoder, first embedded data; using the text describing one or more of the two dimensional weather images, generating, with the trained other weather data encoder, second embedded data; and using the at least one image illustrating position of the at least one weather element, generating, with the trained positional encoder, third embedded data; using the first embedded data, the second embedded data, and/or the third embedded data, generating, with a trained two dimensional weather image decoder, the synthetic two dimensional weather image; using the synthetic two dimensional weather image, generating, with the trained two dimensional weather image encoder, fourth embedded data; and using the fourth embedded data, generating, with a trained three dimensional weather data decoder, the synthetic three dimensional weather data.

Example 5 includes the method of any of Examples 1-4, wherein an untrained two dimensional weather image encoder in a synthetic two dimensional weather data generator AI is first trained, and then the trained two dimensional weather image encoder is used to train an untrained three dimensional weather data decoder

Example 6 includes the method of any of Examples 1-5, further comprising: using the synthetic three dimensional weather data, generating synthetic two dimensional weather data; using the synthetic two dimensional weather data, generating a synthetic two dimensional weather image; and verifying that the synthetic two dimensional weather image represents the descriptive information.

Example 7 includes a non-transitory computer readable medium storing a program causing at least one processor to execute a process to generating synthetic three dimensional weather data, the process comprising: receiving, at a trained artificial intelligence (AI), descriptive information of at least one weather element; and using the descriptive information of the at least one weather element, generating, with the AI, the synthetic three dimensional weather data.

Example 8 includes the non-transitory computer readable medium of Example 7, wherein the descriptive information of the at least one weather element includes at least one two dimensional weather image, text describing one or more of the at least one two dimensional weather image, and/or one or more other weather elements, and/or at least one image illustrating position of the at least one weather element.

Example 9 includes the non-transitory computer readable medium of any of Examples 7-8, wherein the trained AI or one or more components of the trained AI are a trained generative AI.

Example 10 includes the non-transitory computer readable medium of any of Examples 7-9, wherein receiving, at the trained AI, the descriptive information of the at least one weather element comprises receiving, at a trained synthetic two dimensional weather data generator AI, the descriptive information of the at least one weather element; wherein using the descriptive information of the at least one weather element, generating, with the AI, the synthetic three dimensional weather data includes: using the descriptive information of the at least one weather element, generating, with the trained synthetic two dimensional weather data generator AI, a synthetic two dimensional weather image; and using the synthetic two dimensional weather image, generating, with a trained two dimensional weather data to three dimensional weather data converter AI, the synthetic three dimensional weather data.

Example 11 includes the non-transitory computer readable medium of any of Examples 7-10, wherein receiving, at the trained synthetic two dimensional weather data generator AI, the descriptive information of the at least one weather element comprises receiving, by a trained two dimensional weather image encoder, at least one two dimensional weather image; receiving, by a trained other weather data encoder, text describing one or more of two dimensional weather images; and/or receiving, by a trained positional encoder, at least one image illustrating position of the at least one weather element; and wherein using the descriptive information of the at least one weather element, generating, with the trained synthetic two dimensional weather data generator AI, the synthetic two dimensional weather image comprises: at least one of: using the at least one two dimensional weather image, generating, with the trained two dimensional weather image encoder, first embedded data; using the text describing one or more of the two dimensional weather images, generating, with the trained other weather data encoder, second embedded data; and using the at least one image illustrating position of the at least one weather element, generating, with the trained positional encoder, third embedded data; using the first embedded data, the second embedded data, and/or the third embedded data, generating, with a trained two dimensional weather image decoder, the synthetic two dimensional weather image; using the synthetic two dimensional weather image, generating, with the trained two dimensional weather image encoder, fourth embedded data; and using the fourth embedded data, generating, with a trained three dimensional weather data decoder, the synthetic three dimensional weather data.

Example 12 includes the non-transitory computer readable medium of any of Examples 7-11, wherein an untrained two dimensional weather image encoder in a synthetic two dimensional weather data generator AI is first trained, and then the trained two dimensional weather image encoder is used to train an untrained three dimensional weather data decoder.

Example 13 includes the non-transitory computer readable medium of any of Examples 7-12, wherein the process further comprises: using the synthetic three dimensional weather data, generating synthetic two dimensional weather data; using the synthetic two dimensional weather data, generating a synthetic two dimensional weather image; and verifying that the synthetic two dimensional weather image represents the descriptive information.

Example 14 includes an apparatus for generating synthetic three dimensional weather data, the apparatus comprising: input circuitry configured to receive descriptive information of at least one weather element; and processing circuitry communicatively coupled to the input circuitry, including a trained artificial intelligence (AI), and configured to: receive, at the trained AI, the descriptive information of at least one weather element; and using the descriptive information of the at least one weather element, generate, with the AI, the synthetic three dimensional weather data.

Example 15 includes the apparatus of Example 14, wherein the descriptive information of the at least one weather element includes at least one two dimensional weather image, text describing one or more of the at least one two dimensional weather image, and/or one or more other weather elements, and/or at least one image illustrating position of the at least one weather element.

Example 16 includes the apparatus of any of Examples 14-15, wherein the trained AI or one or more components of the trained AI are a trained generative AI.

Example 17 includes the apparatus of any of Examples 14-16, wherein the trained AI includes a trained synthetic two dimensional weather data generator AI and a trained two dimensional weather data to three dimensional weather data converter AI; wherein receive, at the trained AI, the descriptive information of the at least one weather element comprises receive, at the trained synthetic two dimensional weather data generator AI, the descriptive information of the at least one weather element; wherein using the descriptive information of the at least one weather element, generate, with the AI, the synthetic three dimensional weather data includes: using the descriptive information of the at least one weather element, generate, with the trained synthetic two dimensional weather data generator AI, a synthetic two dimensional weather image; and using the synthetic two dimensional weather image, generate, with the trained two dimensional weather data to three dimensional weather data converter AI, the synthetic three dimensional weather data.

Example 18 includes the apparatus of any of Examples 14-17, wherein the trained synthetic two dimensional weather data generator AI includes a trained two dimensional weather image encoder, a trained other weather data encoder, and/or a trained positional encoder; wherein the trained synthetic two dimensional weather data generator AI further includes a trained three dimensional weather data decoder; wherein the trained two dimensional weather data to three dimensional weather data converter AI includes the trained two dimensional weather image encoder and the trained three dimensional weather data decoder; wherein receive, at the trained synthetic two dimensional weather data generator AI, the descriptive information of the at least one weather element comprises receive, by the trained two dimensional weather image encoder, at least one two dimensional weather image; receive, by the trained other weather data encoder, text describing one or more of two dimensional weather images; and/or receive, by the trained positional encoder, at least one image illustrating position of the at least one weather element; and wherein using the descriptive information of the at least one weather element, generate, with the trained synthetic two dimensional weather data generator AI, the synthetic two dimensional weather image comprises: at least one of: using the at least one two dimensional weather image, generate, with the trained two dimensional weather image encoder, first embedded data; using the text describing one or more of the two dimensional weather images, generate, with the trained other weather data encoder, second embedded data; and using the at least one image illustrating position of the at least one weather element, generate, with the trained positional encoder, third embedded data; using the first embedded data, the second embedded data, and/or the third embedded data, generate, with the trained two dimensional weather image encoder, the synthetic two dimensional weather image; using the synthetic two dimensional weather image, generate, with the trained two dimensional weather image encoder, fourth embedded data; and using the fourth embedded data, generate, with the trained three dimensional weather data decoder, the synthetic three dimensional weather data.

Example 19 includes the apparatus of any of Examples 14-18, wherein an untrained two dimensional weather image encoder in a synthetic two dimensional weather data generator AI is first trained, and then the trained two dimensional weather image encoder is used to train an untrained three dimensional weather data decoder.

Example 20 includes the apparatus of any of Examples 14-19, further comprising: using the synthetic three dimensional weather data, generate synthetic two dimensional weather data; using the synthetic two dimensional weather data, generate a synthetic two dimensional weather image; and verify that the synthetic two dimensional weather image represents the descriptive information.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method for generating synthetic three dimensional weather data, the method comprising:
receiving, at a trained artificial intelligence (AI), descriptive information of at least one weather element; and
using the descriptive information of the at least one weather element, generating, with the AI, the synthetic three dimensional weather data; and
optionally, wherein the descriptive information of the at least one weather element includes at least one two dimensional weather image, text describing one or more of the at least one two dimensional weather image, and/or one or more other weather elements, and/or at least one image illustrating position of the at least one weather element.

2. The method of claim 1, wherein receiving, at the trained AI, the descriptive information of the at least one weather element comprises receiving, at a trained synthetic two dimensional weather data generator AI, the descriptive information of the at least one weather element;
wherein using the descriptive information of the at least one weather element, generating, with the AI, the synthetic three dimensional weather data includes:
using the descriptive information of the at least one weather element, generating, with the trained synthetic two dimensional weather data generator AI, a synthetic two dimensional weather image; and
using the synthetic two dimensional weather image, generating, with a trained two dimensional weather data to three dimensional weather data converter AI, the synthetic three dimensional weather data.

3. The method of claim 2, wherein receiving, at the trained synthetic two dimensional weather data generator AI, the descriptive information of the at least one weather element comprises receiving, by a trained two dimensional weather image encoder, at least one two dimensional weather image; receiving, by a trained other weather data encoder, text describing one or more of two dimensional weather images; and/or receiving, by a trained positional encoder, at least one image illustrating position of the at least one weather element; and
wherein using the descriptive information of the at least one weather element, generating, with the trained synthetic two dimensional weather data generator AI, the synthetic two dimensional weather image comprises:
at least one of:
using the at least one two dimensional weather image, generating, with the trained two dimensional weather image encoder, first embedded data;
using the text describing one or more of the two dimensional weather images, generating, with the trained other weather data encoder, second embedded data; and
using the at least one image illustrating position of the at least one weather element, generating, with the trained positional encoder, third embedded data;
using the first embedded data, the second embedded data, and/or the third embedded data, generating, with a trained two dimensional weather image decoder, the synthetic two dimensional weather image;
using the synthetic two dimensional weather image, generating, with the trained two dimensional weather image encoder, fourth embedded data; and
using the fourth embedded data, generating, with a trained three dimensional weather data decoder, the synthetic three dimensional weather data.

4. The method of claim 3, wherein an untrained two dimensional weather image encoder in a synthetic two dimensional weather data generator AI is first trained, and then the trained two dimensional weather image encoder is used to train an untrained three dimensional weather data decoder.

5. The method of claim 1, further comprising:
using the synthetic three dimensional weather data, generating synthetic two dimensional weather data;
using the synthetic two dimensional weather data, generating a synthetic two dimensional weather image; and
verifying that the synthetic two dimensional weather image represents the descriptive information.

6. A computer readable medium storing a program causing at least one processor to execute a process to generating synthetic three dimensional weather data, the process configured to perform the methods of claims 1-5.

7. An apparatus for generating synthetic three dimensional weather data, the apparatus comprising:
input circuitry configured to receive descriptive information of at least one weather element; and
processing circuitry communicatively coupled to the input circuitry, including a trained artificial intelligence (AI), and configured to:
receive, at the trained AI, the descriptive information of at least one weather element; and
using the descriptive information of the at least one weather element, generate, with the AI, the synthetic three dimensional weather data;
optionally, wherein the descriptive information of the at least one weather element includes at least one two dimensional weather image, text describing one or more of the at least one two dimensional weather image, and/or one or more other weather elements, and/or at least one image illustrating position of the at least one weather element.

8. The apparatus of claim 7, wherein the trained AI includes a trained synthetic two dimensional weather data generator AI and a trained two dimensional weather data to three dimensional weather data converter AI;
wherein receive, at the trained AI, the descriptive information of the at least one weather element comprises receive, at the trained synthetic two dimensional weather data generator AI, the descriptive information of the at least one weather element;
wherein using the descriptive information of the at least one weather element, generate, with the AI, the synthetic three dimensional weather data includes:
using the descriptive information of the at least one weather element, generate, with the trained synthetic two dimensional weather data generator AI, a synthetic two dimensional weather image; and
using the synthetic two dimensional weather image, generate, with the trained two dimensional weather data to three dimensional weather data converter AI, the synthetic three dimensional weather data.

9. The apparatus of claim 8, wherein the trained synthetic two dimensional weather data generator AI includes a trained two dimensional weather image encoder, a trained other weather data encoder, and/or a trained positional encoder;
wherein the trained synthetic two dimensional weather data generator AI further includes a trained three dimensional weather data decoder;
wherein the trained two dimensional weather data to three dimensional weather data converter AI includes the trained two dimensional weather image encoder and the trained three dimensional weather data decoder;
wherein receive, at the trained synthetic two dimensional weather data generator AI, the descriptive information of the at least one weather element comprises receive, by the trained two dimensional weather image encoder, at least one two dimensional weather image; receive, by the trained other weather data encoder, text describing one or more of two dimensional weather images; and/or receive, by the trained positional encoder, at least one image illustrating position of the at least one weather element; and
wherein using the descriptive information of the at least one weather element, generate, with the trained synthetic two dimensional weather data generator AI, the synthetic two dimensional weather image comprises:
at least one of:
using the at least one two dimensional weather image, generate, with the trained two dimensional weather image encoder, first embedded data;
using the text describing one or more of the two dimensional weather images, generate, with the trained other weather data encoder, second embedded data; and
using the at least one image illustrating position of the at least one weather element, generate, with the trained positional encoder, third embedded data;
using the first embedded data, the second embedded data, and/or the third embedded data, generate, with the trained two dimensional weather image encoder, the synthetic two dimensional weather image;
using the synthetic two dimensional weather image, generate, with the trained two dimensional weather image encoder, fourth embedded data; and
using the fourth embedded data, generate, with the trained three dimensional weather data decoder, the synthetic three dimensional weather data.

10. The apparatus of claim 9, wherein an untrained two dimensional weather image encoder in a synthetic two dimensional weather data generator AI is first trained, and then the trained two dimensional weather image encoder is used to train an untrained three dimensional weather data decoder.
